(19) Europäisches Patentamt / European Patent Office / Office européen des brevets

(11) **EP 2 594 534 B1**

(12) **EUROPEAN PATENT SPECIFICATION**

(45) Date of publication and mention
of the grant of the patent:
**24.09.2014 Bulletin 2014/39**

(21) Application number: **11189304.6**

(22) Date of filing: **16.11.2011**

(51) Int Cl.:
*C02F 11/00* <sup>(2006.01)</sup>          *G01G 19/12* <sup>(2006.01)</sup>
*G01G 21/23* <sup>(2006.01)</sup>

(54) **Weighing apparatus**

Wiegevorrichtung

Appareil de pesage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2013 Bulletin 2013/21**

(73) Proprietor: **JFE Advantech Co. Ltd.
Nishinomiya-shi, Hyogo 663-8202 (JP)**

(72) Inventor: **Harada, Shunji
NISHINOMIYA-SHI, Hyogo 663-8202 (JP)**

(74) Representative: **Eisenführ Speiser
Patentanwälte Rechtsanwälte PartGmbB
Postfach 10 60 78
28060 Bremen (DE)**

(56) References cited:
**EP-A1- 0 004 254     EP-A2- 1 346 943
US-A- 3 857 452     US-A- 5 677 498**

**Description**

BACKGROUND OF THE INVENTION

1. Field of the Invention

The present invention relates to a weighing apparatus. The weighing apparatus according to the present invention is suitable for weighing a loaded object in vehicles having a dumping mechanism such as dump trucks, refuse collection vehicles, and sludge suction vehicles in order to detect an overload and such, and for weighing packages at a package pickup and delivery station and such.

2. Description of Related Art

Stationary truck scales have been conventionally known as an apparatus capable of measuring a loaded object taken on vehicles such as trucks and refuse collection vehicles. However, such truck scales are a large-scale apparatus and expensive in cost for equipment. In order to allow measurement of a loading amount at a pickup site and prevent overloading, there is a strong demand for on-vehicle measurement of a loaded object.
Further, in Japan, a large-size dump truck is required by so-called Dump Control Act law to be provided with an apparatus for automatically measuring a loaded weight (dead weight meter) in order to prevent overloading.
Therefore, there have been proposed various in-vehicle weighing apparatuses mounted on a vehicle and for measuring a loaded weight, as the one disclosed in US 5677498.
A dump vehicle typically has a structure in which a loading platform is caused to incline using a hydraulic cylinder. An apparatus (dead weight meter) that detects an overloaded state by detecting a force applied to the hydraulic cylinder using a hydraulic sensor when the loading platform is inclined has been put to practical use (Japanese Unexamined Patent Application Publication No. H08-58456). However, the dead weight meter of this type has a fundamental drawback that a weighed value differs largely depending on whether the loaded object is placed forward side or backward side on the loading platform.
Japanese Unexamined Patent Application Publications No. 2006-52084, No. 2007-139511, and No. 2009-101979 disclose an in-vehicle weighing apparatus of a type that correctly weighs by incorporating three to four load cells that support an entire loading case. An apparatus of this type requires an alteration to a part of a vehicle frame so as to incorporate load cells and an addition of a hydraulic cylinder, posing a problem that these alteration and addition increase the vehicle weight and reduces the maximum loading weight. In addition, an apparatus of this type is expensive due to an increased number of components.

SUMMARY OF THE INVENTION

The present invention is made in view of the above problems, and an object of the present invention is to provide a high-precision weighing apparatus that is highly safe and economical, requiring a minimized number of load cells and being less influenced by a position of a gravity center of an object to be weighed.
The present invention provides a weighing apparatus including: a loading member on which an object to be weighed is placed, one end of the loading member being supported by a hinge mechanism rotatably with respect to a base; a diagonally extending supporting member having one end rotatably coupled to a position spaced apart from the one end toward the other end of the loading member, and the other end rotatably coupled to the base; and a pin-type load cell having a shaft-like body constituting a pin of the hinge mechanism, and attached to the base such that a direction of load detection is perpendicular to an axial force of the supporting member.
A truss structure is employed, in which the loading member coupled by the hinge mechanism cantileveredly with respect to the base is supported by the diagonally extending supporting member, and the load in the direction perpendicular to the axial force of the supporting member is measured using the pin-type load cell incorporated in the hinge mechanism. With this, it is possible to weigh an object to be weighed on the loading member with high precision while reducing an influence of the position of the gravity center of the object to be weighed. Further, it is possible to reduce a number of load cells and attached devices as compared to the conventional example, thereby achieving a low-cost weighing apparatus.
The present invention is applicable to an in-vehicle weighing apparatus for weighing a loaded object for vehicles having a dumping mechanism such as dump trucks, refuse collection vehicles, and sludge suction vehicles. In this case, the base is a body of a vehicle, the loading member is mounted on the vehicle body, rotatably coupled at a rear side to the vehicle body by the hinge mechanism, and operable to perform an inclining motion centering the hinge mechanism, the supporting member is an extensible cylinder, the one end of which is rotatably coupled to the loading member and the other end of which is coupled rotatably with respect to the vehicle body, and the pin-type load cell is fixed to the vehicle body such that a direction perpendicular to a thrust force of the cylinder when the cylinder is extended so as to cause the loading member to incline is identical with the direction of the load detection.

With this, incorporating the pin-type load cell into the hinge mechanism facilitates mounting of the weighing apparatus on the vehicle without changing a structure of the vehicle to a large extent. Further, as the shaft-like body of the pin-type load cell is used as a pin for the hinge mechanism, adding the weighing apparatus hardly increases or alters the vehicle weight or the vehicle height, or may not decrease the maximum loading weight. In addition, as the loading member is placed on the vehicle body when not weighing or while driving, it is possible to use safely without problem with a strength of the vehicle body.

The present invention is not limited to the in-vehicle weighing apparatus, and also applicable to a stationary weighing apparatus installed in a package pickup and delivery station for vehicles such as trucks, for example. In this case, the base is a stepped floor structure having a first floor portion and a second floor portion disposed at a position lower than the first floor portion, the loading member is rotatably coupled by the hinge mechanism to the floor structure such that a height of the one end of the loading member is identical with that of the first floor portion, the supporting member is a diagonally extending supporting member having a fixed length, the one end of which is rotatably coupled to the loading member, and the other end of which is rotatably coupled to the second floor portion, and the pin-type load cell is fixed to the floor structure such that a direction perpendicular to an axial force of the supporting member is identical to the direction of the load detection.

The weighing apparatus according to the present invention is capable of weighing an object to be weighed with high precision, while minimizing a number of load cells and reducing an influence of a position of a gravity center of the object to be weighed, and highly safe and economical. In addition, when applied to an in-vehicle weighing apparatus, the apparatus can be easily incorporated into a vehicle having a dumping mechanism without altering a structure of the vehicle to a large extent, and hardly increases and changes weight and height of the vehicle.

BRIEF DESCRIPTION OF THE DRAWING

Fig. 1 is a side elevational view schematically illustrating a truss structure and a weighing principle of a weighing apparatus according to the present invention (when a loading platform is flat);

Fig. 2 is a side elevational view schematically illustrating the truss structure and the weighing principle of the weighing apparatus according to the present invention (when the loading platform is inclined);

Fig. 3 is a side elevational view schematically illustrating an example in which a direction of an inclined rod is opposite of that in the weighing apparatus shown in Fig. 1 and Fig. 2;

Fig. 4 is a side elevational view schematically illustrating an example in which the inclined rod of the weighing apparatus shown in Fig. 3 is replaced by a link mechanism;

Fig. 5 is a left-side elevational view schematically illustrating a sludge suction vehicle provided with an in-vehicle weighing apparatus according to a first embodiment of the present invention (when a tank is flat);

Fig. 6 is a cross-sectional view taken along line VI-VI in Fig. 5;

Fig. 7 is a left-side elevational view schematically illustrating the sludge suction vehicle provided with the in-vehicle weighing apparatus according to the first embodiment of the present invention (when the tank is inclined);

Fig. 8 is an enlarged view near a pin-type load cell viewed from side;

Fig. 9 is an enlarged view near the pin-type load cell viewed from back;

Fig. 10A is a front elevational view schematically illustrating the pin-type load cell;

Fig. 10B is a cross-sectional view taken along line X-X in Fig. 10A;

Fig. 11 is a chart showing a change of a theoretical output ratio to an inclined angle in a load detection direction with respect to a direction of a strain detecting portion of the pin-type load cell shown in Fig. 10A and Fig. 10B;

Fig. 12A is a front elevational view schematically illustrating an alternative example of the pin-type load cell;

Fig. 12B is a cross-sectional view taken along line XII-XII in Fig. 12A;

Fig. 13A is a front elevational view schematically illustrating another alternative example of the pin-type load cell;

Fig. 13B is a cross-sectional view taken along line XIII-XIII in Fig. 13A; and

Fig. 14 is a side elevational view schematically illustrating a weighing apparatus for a package pickup and delivery station according to the second embodiment of the present invention.

DESCRIPTION OF THE PREFERRED EMBODIMENTS

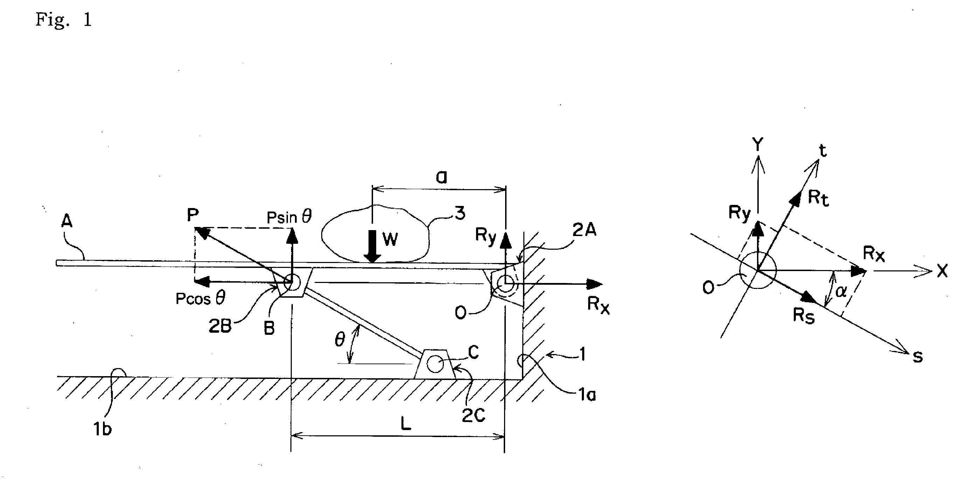

First, a basic structure and a weighing principle of a weighing apparatus according to the present invention is described with reference to Fig. 1 to Fig. 4.

Referring to Fig. 1, the weighing apparatus of the present invention is basically provided with a loading platform A that generally extends horizontally, and an inclined rod BC that supports the loading platform A. A one end O of the loading platform A is rotatably supported by a hinge 2A with respect to a side wall 1a of a base 1. A tip end B of the inclined rod BC is rotatably coupled to the loading platform A by a hinge 2B at a position distant from the hinge 2A (point O) by a horizontal distance L. In Fig. 1, the inclined rod BC extends from the loading platform A diagonally downward right in the drawing (from the tip end side to the base end side of the loading platform A) . The other end C of the inclined rod BC is rotatably coupled to a bottom wall 1b of the base 1 by a hinge 2C. Specifically, the loading platform A, the inclined rod BC, and the base 1 constitute a truss structure of some kind. The inclined rod BC can be a rod having a fixed length, or having a variable-length mechanism such as a hydraulic cylinder, for example.

Next, balances of moments and forces are considered, where an inclination angle of the inclined rod BC to a horizontal direction is θ, an axial force of the inclined rod BC (thrust force when using a hydraulic rod) is P, a horizontal distance between a gravity center of an object to be weighed 3 of weight W placed on the loading platform A and the hinge 2A (point O) is a. Here, as shown in Fig. 1, an X-Y coordinate system is set taking a horizontal direction as an X axis, a vertical direction as a Y axis, and the hinge 2A (point O) as an origin. Further, an X-direction component and a Y-direction component of a reaction force R acting on the loading platform A via a pin of the hinge 2A are respectively taken as $R_x$ and $R_y$. Here, for the sake of easiness of understanding, Fig. 1 shows height of the hinge 2A (point O) and height of the tip end B of the inclined rod BC (height of a position in the Y direction) at the same level.

From the balance of the moments around the point O, an expression 1 listed below is obtained.

Expression 1

$$P \sin\theta \times L = W \times a$$
$$P = (a/L)/\sin\theta \times W \quad \cdot \cdot \cdot \quad (1)$$

Further, from the balance of the forces acting on the loading platform A, expressions 2 and 3 listed below are obtained.

Expression 2

$$\begin{cases} R_x = P\cos\theta \\ \quad = (a/L) \times (\cos\theta/\sin\theta)W \quad \cdot \cdot \cdot \quad (2) \\ R_y = W - P\sin\theta \\ \quad = \{1 - (a/L)\}W \quad \quad \cdot \cdot \cdot \quad (3) \end{cases}$$

Here, in an s-t coordinate system that is obtained by rotating the X-Y coordinate system by an angle α, an s-direction component is taken as $R_s$ and a t-direction component is taken as $R_t$. After coordinate transformation of the components $R_x$ and $R_y$ of the reaction force to the s-t coordinate system, expressions 4 and 5 listed below are obtained.

Expression 3

$$\begin{cases} R_s = R_x \cos\alpha - R_y \sin\alpha \\ \quad = (a/L) \times (\cos\theta/\sin\theta)W\cos\alpha - \{1-(a/L)\}W\sin\alpha \\ \quad = \{(a/L) \times \cos(\theta-\alpha)/\sin\theta - \sin\alpha\}W \qquad \cdots \quad (4) \\ R_t = R_x \sin\alpha + R_y \cos\alpha \\ \quad = (a/L) \times (\cos\theta/\sin\theta)W\sin\alpha + \{1-(a/L)\}W\cos\alpha \\ \quad = \{-(a/L) \times \sin(\theta-\alpha)/\sin\theta + \cos\alpha\}W \qquad \cdots \quad (5) \end{cases}$$

When $\alpha=\theta$ from the expressions 4 and 5, expressions 6 and 7 listed below are obtained.

Expression 4

$$\begin{cases} R_s = W\{(a/L)/\sin\theta - \sin\theta\} & \cdots \quad (6) \\ R_t = W\cos\theta & \cdots \quad (7) \end{cases}$$

Thus, an expression 8 listed below is established for the weight W of the object to be weighed 3.

Expression 5

$$W = R_t/\cos\theta \quad (0 \le \theta < 90°) \qquad \cdots \quad (8)$$

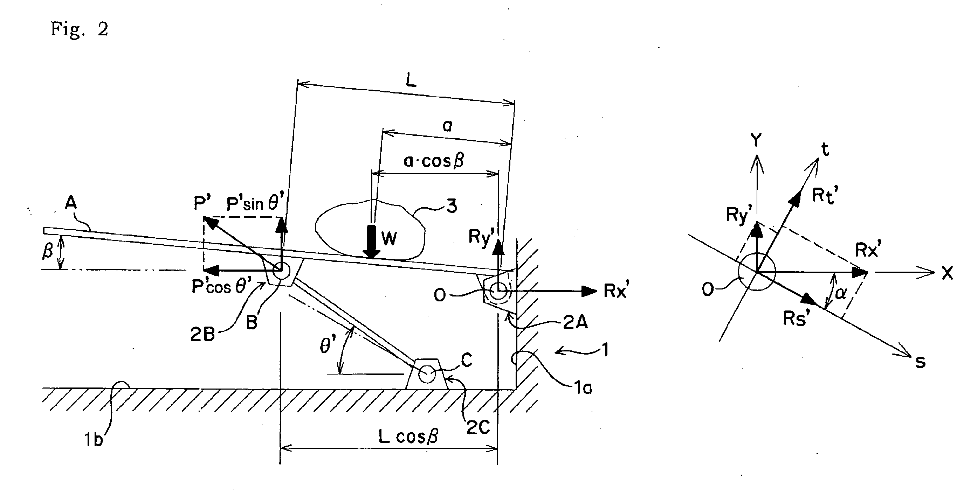

Next, as shown in Fig. 2, a case in which the length of the inclined rod BC increases (the rod is pushed out when using the hydraulic cylinder), and the loading platform A is rotated by an angle $\beta$ centering the hinge 2A (point O) (a case in which the loading platform A is pushed up and supported) is considered.
Due to a change in a geometrical relation, it is assumed that $\theta$ becomes $\theta'$, P becomes P', $R_x$ becomes $R_x'$, and $R_y$ becomes $R_y'$. By substituting the variables in the expressions 1 to 8 taking the fact that L becomes $L\cos\beta$ and $\alpha$ becomes $\alpha.\cos\beta$ into account, expressions 1' to 8' listed below are established similarly to the expressions 1 to 8.
First, from the balance of the moments around the point O, the expression 1' listed below is obtained, and from the balance of the forces acting on the loading platform A, the expressions 2' and 3' listed below are obtained.

Expression 6

$$P'L(\sin\theta'\cos\beta - \cos\theta'\sin\beta) = W \times a \cdot \cos\beta$$
$$P'L\sin(\theta'-\beta) = W \times a \cdot \cos\beta$$
$$P' = (a/L) \times \cos\beta/\sin(\theta'-\beta) \times W \qquad \cdots \quad (1')$$

Expression 7

$$\begin{cases} R_x' = (a/L) \times \cos\beta \cos\theta' / \sin(\theta'-\beta) \times W & \cdots \ (2') \\ R_y' = \{1 - (a/L)\cos\beta \sin\theta' / \sin(\theta'-\beta)\}W & \cdots \ (3') \end{cases}$$

In the s-t coordinate system that is obtained by rotating the X-Y coordinate system by the angle $\alpha$, by taking the s-direction component as $R_s'$ and the t-direction component as $R_t'$, and performing the coordinate transformation to $R_x'$ and $R_y'$, the expressions 4' and 5' listed below are obtained.

Expression 8

$$\begin{cases} R_s' = \{(a/L) \times \cos\beta \cos(\theta'-\alpha) / \sin(\theta'-\beta) - \sin\alpha\}W & \cdots \ (4') \\ R_t' = \{-(a/L) \times \cos\beta \sin(\theta'-\alpha) / \sin(\theta'-\beta) + \cos\alpha\}W & \cdots \ (5') \end{cases}$$

When $\alpha=\theta'$ from the expressions 4' and 5', the expressions 6' and 7' listed below are obtained.

Expression 9

$$\begin{cases} R_s' = W\{(a/L) \times \cos\beta / \sin(\theta'-\beta) - \sin\theta'\} & \cdots \ (6') \\ R_t' = W\cos\theta' & \cdots \ (7') \end{cases}$$

Thus, the expression 8' listed below is established for the weight W of the object to be weighed 3.

Expression 10

$$W = R_t' / \cos\theta' \quad (0 \leq \theta' < 90°) \quad \cdots \ (8')$$

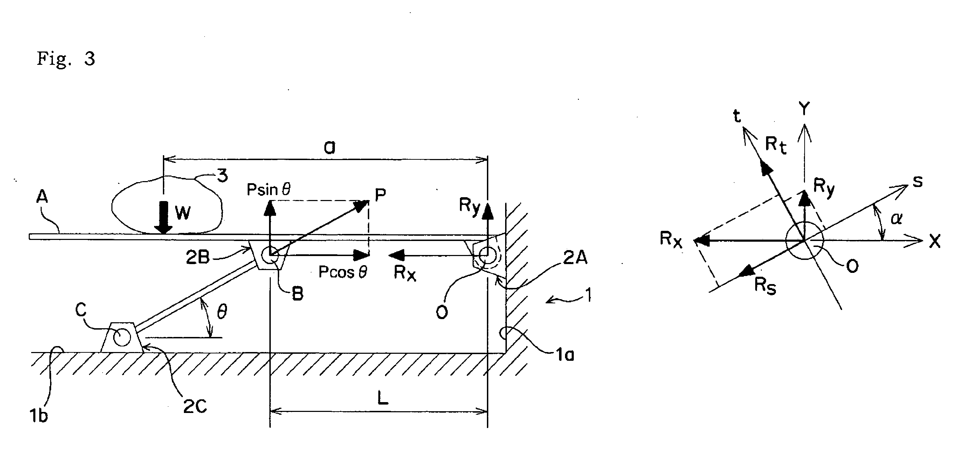

Also in an example shown in Fig. 3 in which the inclined rod BC extends in a direction that is opposite of that shown in Fig. 1 and Fig. 2, that is, from the loading platform A diagonally downward left in the drawing (from the base end side to the tip end side of the loading platform A), the expressions 1 to 8 and the expressions 1' to 8' can be established.

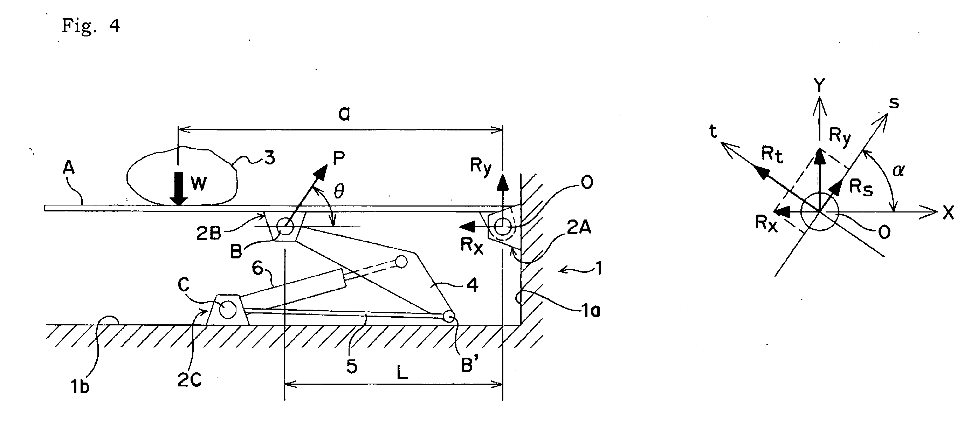

Further, in an example in which, as shown in Fig. 4, a link mechanism BB'C including a lift arm 4 and a tension link 5 is provided in place of the inclined rod BC (a reference numeral 6 is a hydraulic cylinder for driving), when a direction of the thrust force P acting on the loading platform A via a pin of the hinge 2B makes an angle $\theta$ with the horizontal direction, the expressions 1 to 8 and the expressions 1' to 8' can be established.

A position of the gravity center $\alpha$ of the object to be weighed 3 varies according to a deviation and such of a position of the object to be weighed 3 on the loading platform A and a density distribution of the object to be weighed 3 itself. Values of the expressions 1 to 6 and the expressions 1' to 6' change depending on the position of the gravity center $\alpha$ of the object 3 to be weighed as these expressions include the position of the gravity center $\alpha$ as a variable. By contrast, the expressions 7 and 7' do not include the position of the gravity center $\alpha$, and therefore values of $R_t$ and $R_t'$ in the expressions do not change in principle even if the position of the gravity center $\alpha$ of the object to be weighed 3 changes. Further, as shown by the expressions 8 and 8', the weight W of the object to be weighed 3 can be calculated based only on $R_t$, $R_t'$, and the angles $\theta$ and $\theta'$.

Here, $R_t'$ and $R_s'$ are the components of the reaction force acting on the loading platform A via the hinge 2A, and a force (load) of the same magnitude as and opposite in direction from $R_t$ and $R_t'$ act on the pin of the hinge 2A. Taking the components of the load as $F_t'$ and $F_s'$, relations expressed by expressions 9 and 10 listed below are established.

Expression 11

$$\begin{cases} F_t' = -R_t' & \cdots \quad (9) \\ F_s' = -R_s' & \cdots \quad (10) \end{cases}$$

As described above, by measuring the load $F_t'$ of the one end O of the loading platform A acting on the pin of the hinge 2A in a state in which an inclination of the inclined rod BC is maintained at the certain angle $\theta'$, the load W of the object to be weighed 3 can be calculated from the expressions 9 and 8' based on the measured load $F_t'$ and the set angle $\theta'$. Specifically, by measuring the load $F_t'$ in a direction perpendicular to the axial force P of the inclined rod BC by the loading platform A out of the loads $F_t'$ and $F_s'$ that act on the pin of the hinge 2A, the load W of the object to be weighed 3 can be weighed without being influenced by the position of the gravity center $\alpha$ of the object to be weighed 3 on the loading platform A. Further, the load $F_t'$ of the one end O of the loading platform A acting on the pin of the hinge 2A can be measured by incorporating a pin-type load cell to the hinge 2A. Such a pin-type load cell is known among those skilled in the art, and disclosed in Japanese Unexamined Patent Application Publication No. 2007-139511, for example.

First Embodiment

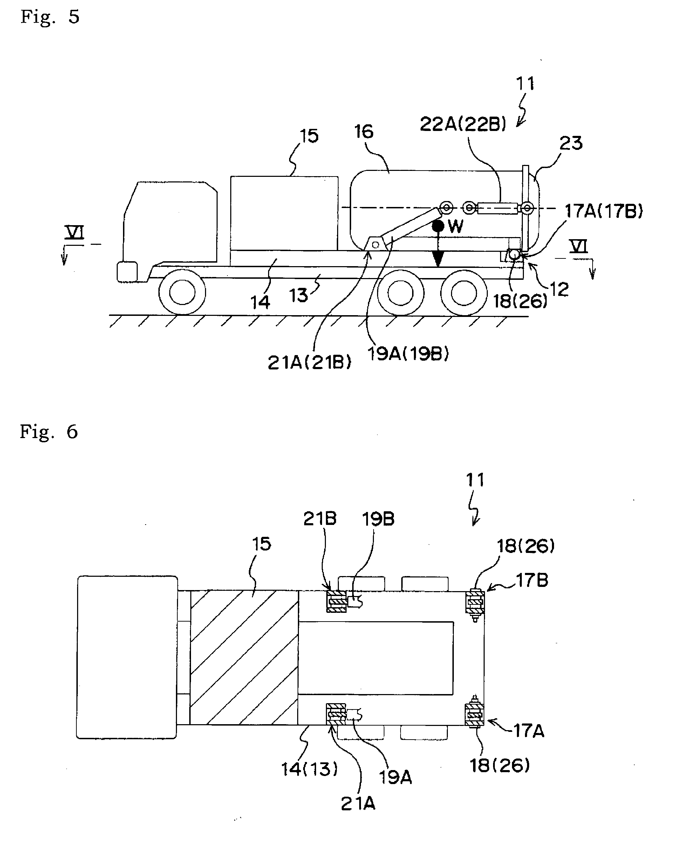

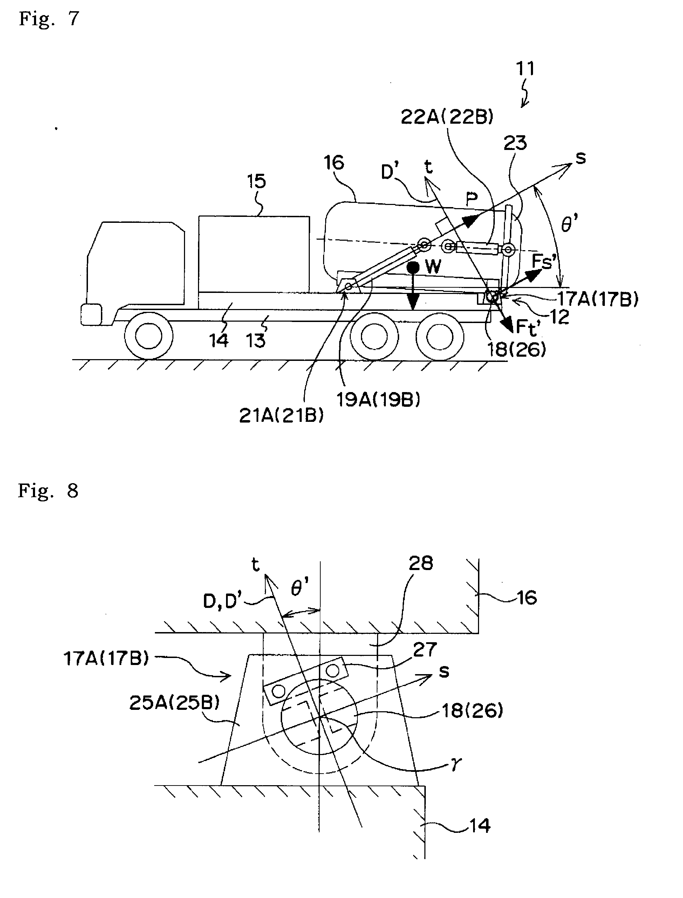

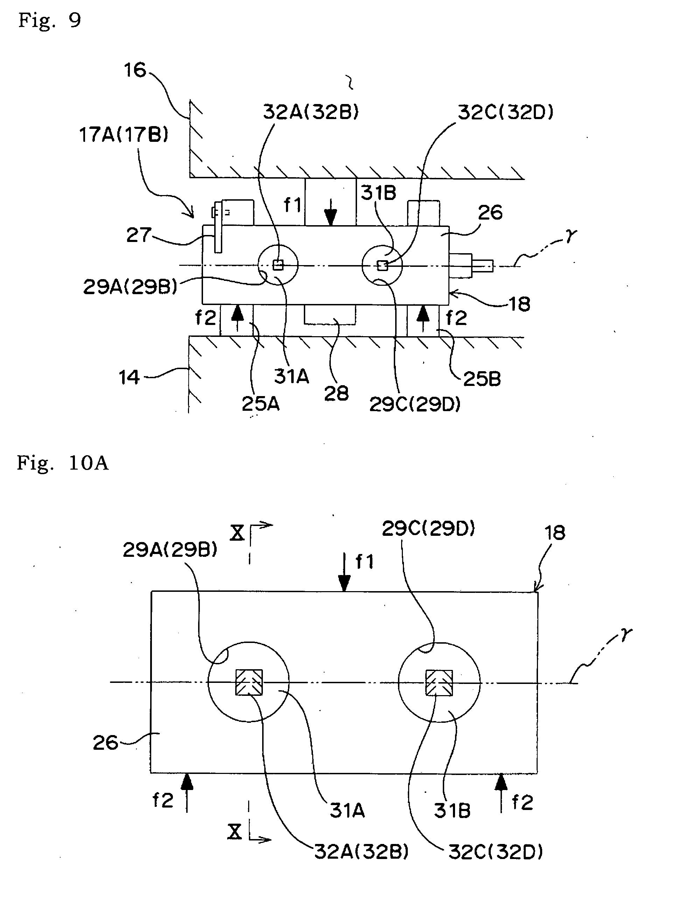

A sludge suction vehicle 11 having a dump discharge function shown in Fig. 5 to Fig. 7 is, in order to detect an overload and such, provided with an in-vehicle weighing apparatus 12 according to an embodiment of the present invention. The sludge suction vehicle 11 is provided with a tank 16 on a sub-frame 14 fixed on a chassis 13, and the tank 16 is configured to pool sludge suctioned by a suction-collection apparatus 15. The tank 16 is rotatably coupled to the sub-frame 14 by hinges 17A and 17B at two positions on both sides in the rear of the tank 16. As will be described later, each of the hinges 17A and 17B is provided with pin-type load cells 18. Further, dump cylinders 19A and 19B configured to cause the tank 16 to incline are provided on both sides in the forward from the hinges 17A and 17B. Each of the dump cylinders 19A and 19B is configured such that an upper end of the cylinder as a tip end of a rod is rotatably coupled by a pin to a side surface of the tank 16, and that a lower end of the cylinder is coupled by the hinges 21A and 21B rotatably with respect to the sub-frame 14. A discharge door 23 that is opened and closed by discharge cylinders 22A and 22B is provided at the end of the tank 16.
As shown in Fig. 5, when not discharging, the bottom surface of the tank 16 is placed on the sub-frame 14, and a most part of the weight of the tank acts on the sub-frame 14. By contrast, when discharging, the dump cylinders 19A and 19B are actuated and the tank 16 is inclined toward the back centering the hinges 17A and 17B, and at the same time, the discharge door 23 is opened by the discharge cylinders 22A and 22B to externally discharge the accumulation within the tank 16. The dump cylinders 19A and 19B are typically configured by a hydraulic cylinder, and able to stop an inclining motion of the tank 16 at any arbitrary position by operating a directional control valve of a hydraulic circuit to stop supply and discharge of a pressure oil to a head side of the dump cylinders 19A and 19B.
The in-vehicle weighing apparatus 12 according to this embodiment has the same truss structure as that shown in Fig. 3. Specifically, the tank 16 corresponds to the loading platform A in Fig. 3, and the hinges 17A and 17B correspond to the hinge 2A (point O) in Fig. 3. Further, the dump cylinders 19A and 19B correspond to the inclined rod BC in Fig. 3, the tip ends of the rods of the dump cylinders 19A and 19B correspond to a point B in Fig. 3, and the base ends of the dump cylinders 19A and 19B correspond to a point C Fig. 3. Therefore, by measuring the load $F_t'$ in the direction perpendicular to the thrust force P of the dump cylinders 19A and 19B using the pin-type load cells 18 incorporated in the hinges 17A and 17B in a state in which the tank 16 is caused to incline and its bottom surface is lifted above the sub-frame 14, the weight W (corresponding to the weight W of the object to be weighed 3 in Fig. 3) of the accumulation within the tank 16 can be weighed.
Referring to Fig. 8 and Fig. 9, the hinges 17A and 17B respectively include a pair of anchor bearings 25A and 25B fixed to the sub-frame 14. A shaft-like body 26 of each pin-type load cell 18 is overall in a columnar shape, and both ends of the shaft-like body 26 are supported by the anchor bearings 25A and 25B in a posture in which an axial line $\gamma$ of the shaft-like body 26 extends horizontally in an across-the-width direction. A rotation retainer 27 screwed to the anchor bearing 25A retains the shaft-like body 26 to the anchor bearings 25A and 25B and positions an angular position of the shaft-like body 26 centering the axial line $\gamma$. Further, a movable bearing 28 fixed to the bottom surface of the tank 16 is rotatably coupled to a central portion of the shaft-like body 26, and the load of the tank 16 is applied to a central portion of the pin-type load cells 18. In Fig. 9, a reference sign f1 represents a load acting on the central portion of the pin-type load cells 18 from the movable bearing 28, and a reference sign f2 represents a support reaction force acting on both ends of the pin-type load cells 18 from the anchor bearings 25A and, 25B.

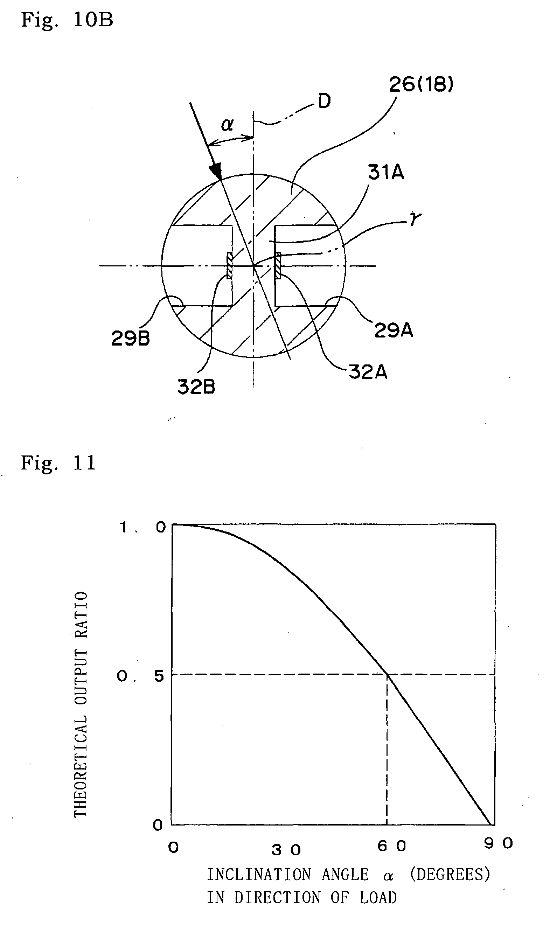

Referring also to Fig. 10A and Fig. 10B, the shaft-like body 26 of the pin-type load cell 18 is provided with recessed portions 29A-29D in pairs respectively at a portion between the anchor bearing 25A and the movable bearing 28 and a portion between the anchor bearing 25B and the movable bearing 28, each recessed portion having a circular cross-section along a direction perpendicular to the axial line $\gamma$ and the cross-sections of each pair face toward each other. Strain inducing portions 31A and 31B each configured in a relatively thick disk shape having a reduced cross-sectional area in the direction perpendicular to the axial line $\gamma$ are respectively provided between the recessed portions 29A and 29B and between the recessed portions 29C and 29D. The strain inducing portions 31A and 31B are each configured to have a shape so as to induce a more adequate shear strain due to the load applied from the movable bearing 28. Strain gauges 32A-32D are applied on both sides of each of the strain inducing portions 31A and 31B. The strain gauges 32A-32D constitute a Wheatstone bridge circuit so that an electrical signal in proportion to the load can be obtained.

The load $F_t'$ and the load $F_s'$ that is perpendicular to the load $F_t'$ act on the pin-type load cells 18 at the same time. The load $F_s'$ includes the position of the gravity center $\alpha$ as a variable (see expressions 6' and 10), and its value varies depending on the position of the gravity center $\alpha$. As described with reference to Fig. 1 to Fig. 4, by measuring the load $F_t'$ that is perpendicular to the direction of the thrust force P of the dump cylinders 19A and 19B, out of the loads $F_t'$ and $F_s'$, the weight W can be weighed without being influenced by the position of the gravity center $\alpha$ of the accumulation within the tank 16. Therefore, it is preferable that the pin-type load cells 18 detect only the load $F_t'$, and an output for the load $F_s'$ be zero. Each of the pin-type load cells 18 incorporated in the hinges 17A and 17B has an angular position centering the axial line $\Upsilon$ so as to minimize the output for the load $F_s'$. Next, this point is described.

An output from a load cell typically varies depending on the direction of the load, and a load axis (load detection direction) that is usually used is determined. In a case of the pin-type load cells 18 shown in Fig. 10A and Fig. 10B, a direction making 0 degrees with a cross-sectional plane of the strain inducing portions 31A and 31B in the drawing is taken as a load detection direction D'. Fig. 11 shows a change of a theoretical output ratio to the inclined angle $\alpha$ of the load detection direction D' with respect to a direction D of the strain inducing portions 31A and 31B ($V/V0=\cos\alpha$, where V is an output at a certain inclined angle $\alpha$, and V0 is an output when $\alpha=0$). The theoretical output ratio is maximum when the inclined angle $\alpha$ of the load detection direction D' with respect to the direction D of the strain inducing portions 31A and 31B is 0 degrees. The theoretical output ratio decreases as the inclined angle $\alpha$ increases, and when the inclined angle $\alpha$ reaches 90 degrees, the theoretical output ratio becomes almost zero. Therefore, by installing the shaft-like body 26 of the pin-type load cell 18 in a posture rotated centering the axial line $\Upsilon$ of the elastic body by the angle $\theta'$ such that the load detection direction D' of the pin-type load cells 18 (0-degree direction) becomes identical with a direction perpendicular to the thrust force P of the dump cylinders 19A and 19B (direction corresponding to the t direction in the s-t coordinate system in Fig. 3), it is possible to detect only the load $F_t'$ necessary to weigh the weight W and reduce the output for the load $F_s'$ to substantially zero.

When not weighing, each of the rods of the dump cylinders 19A and 19B is at a retracted position, and the bottom surface of the tank 16 is placed on the sub-frame 14. When weighing, each of the rods of the dump cylinders 19A and 19B extends, and the tank 16 is inclined by rotating about the hinges 17A and 17B. A front section of the tank 16 is lifted up to about a predetermined position (50 mm to 150 mm, for example), and the bottom surface of the tank 16 is separated from the sub-frame 14. In this state, the tank 16 is supported by the dump cylinders 19A and 19B and the hinges 17A and 17B at the rear. When measuring, the inclined angle $\theta'$ of the dump cylinders 19A and 19B when causing the tank 16 to incline is set to be a constant value. In order to stop the inclining motion of the tank 16 at the constant inclined angle $\theta'$, it is possible to provide a scale indicating a stop position, and manually stop the operation of the dump cylinders 19A and 19B based on the visual observation of the scale. Alternatively, it is possible to provide a proximity switch and automatically stop the dump cylinders 19A and 19B when the tank 16 reaches the predetermined inclined angle $\theta'$. As described above, each of the pin-type load cells 18 incorporated in the hinges 17A and 17B is provided with the shaft-like body 26 in a posture rotated centering the axial line $\Upsilon$ by the angle $\theta'$ such that the load detection direction D' becomes the direction perpendicular to the thrust force P of the dump cylinders 19A and 19B.

The pin-type load cells 18 detects when measuring that load $F_t'=W\cos\theta$, and calibrates an indicator so as to display this value as the weight W when the in-vehicle weighing apparatus 12 is initially adjusted (span adjustment). Generally, the calibration of the indicator (span adjustment) is carried out by providing the tank 16 with a weight or an object whose weight is known. In a state in which the tank 16 is empty, the weight of the tank 16 itself acts on the pin-type load cells 18. The indicator is adjusted such that the displayed weight is zero by subtracting the output in the empty state, and that an amount increased by the weight of the loaded object within the tank 16 is displayed as a value of the weight.

Although the pin-type load cells 18 detects that load Ft'=Wcosθ, Ft' becomes zero when the inclined angle θ' of the dump cylinders 19A and 19B is 90 degrees at which as described with reference to Fig. 11, and it is not possible to weigh in principle. Further, when θ' is near 90 degrees, the weighing precision reduces as the load Ft' is small. Accordingly, the inclined angle θ' is set to be smaller than 75 degrees (20 degrees, for example) .

The inclined angle θ' of the dump cylinders 19A and 19B is obtained from a design value, and an rotational angle of the pin-type load cells 18 centering the axial line ϒ can be determined based on this. However, there is a manufacturing error and an installation error in practice, and it is often not possible to obtain a characteristic as intended by theory. Whether or not a measured weight value of the obj ect to be weighed within the tank 16 changes according to the position of the gravity center can be confirmed by placing a weight and such of a certain weight at different positions in the tank 16 in the adjustment. If the weighed value differs largely depending on the positions at which the weight is placed, by estimating a correction value for the inclined angle θ' based on the expression 5' and such, and adjusting the rotational angle of the pin-type load cells 18 based on the correction value, it is possible to reduce the variation of the measured weight value of the object to be weighed of in the tank 16 according to the position of the gravity center to a degree at which there is no practical problem.

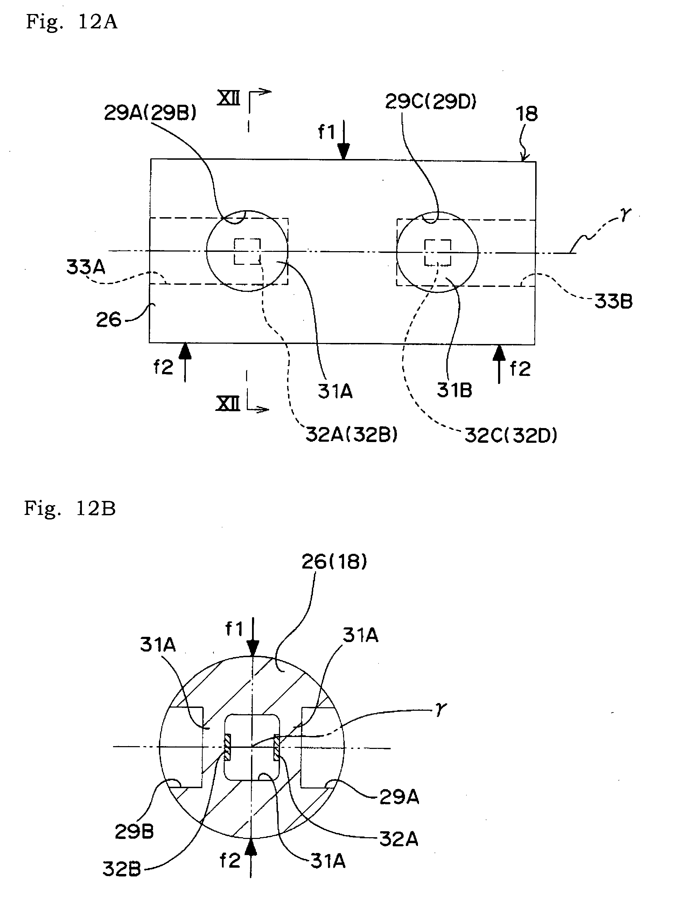

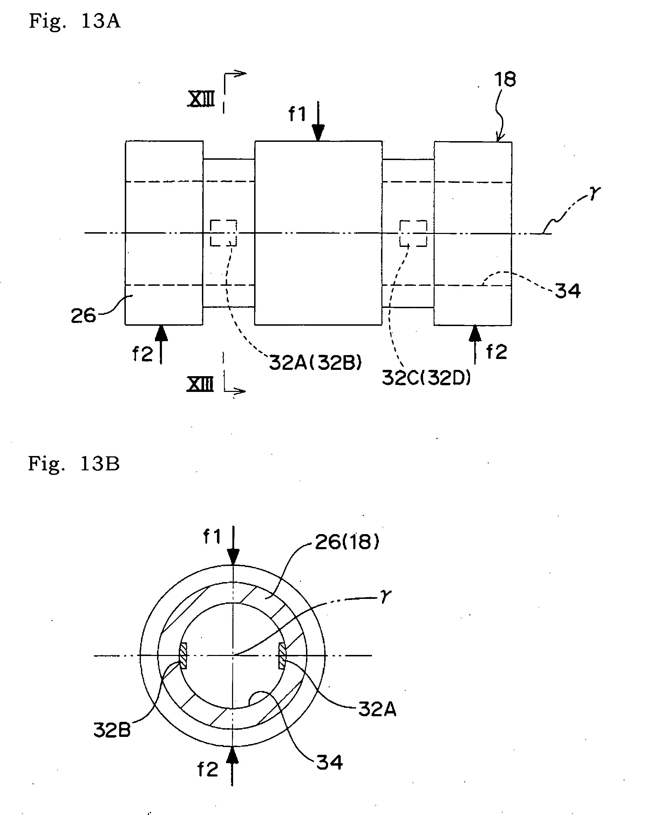

Fig. 12A and Fig. 12B show another example of the pin-type load cell 18 that can be used for the in-vehicle weighing apparatus 12 according to this embodiment. The pin-type load cell 18 of this type is configured such that the shaft-like body 26 is provided with recessed portions 33A and 33B recessed from both ends along the axial line γ, in addition to the recessed portions 29A-29D similar to that of Fig. 10A and Fig. 10B. The strain gauges 32A-32D are applied within the strain inducing portions 31A and 31B configured by the recessed portions 29A-29D, 33A, and 33B. Fig. 13A and Fig. 13B also show another example of the pin-type load cell 18. The pin-type load cell 18 of this type is configured such that the shaft-like body 26 is provided with the strain gauges 32A-32D applied to an inner wall of a through hole 34 that penetrates between the both ends. While a bending moment acts on the shaft-like body 26 of the pin-type load cell 18 (see reference signs f1 and f2 in Fig. 10A, Fig. 12A, and Fig. 13A), it is preferable that the strain gauges 32A-32D not detect a strain due to the bending moment in order to measure the load $F_t'$ with high precision. The bending moment becomes large at an outer circumference of the shaft-like body 26 and zero at the axial line γ (neutral axis), and therefore the strain gauges 32A-32D are less susceptible to the bending moment as the strain gauges 32A-32D are positioned closer to the axial line γ. The pin-type load cell 18 shown in Fig. 10A, Fig. 10B, Fig. 12A, and Fig. 12B, as compared to those in that shown in Fig. 13A and Fig. 13B, include the strain gauges 32A-32D applied at the positions closer to the axial line γ of the shaft-like body 26, and this allows measurement of the load $F_t'$ with higher precision. However, the pin-type load cell 18 of Fig. 13A and Fig. 13B has a simple structure in which it is sufficient that the shaft-like body 26 is provided with the single through hole 34, and thus provides an advantageous effect that the shaft-like body 26 can be processed easily and manufactured at low cost, as compared to those shown in Fig. 10A, Fig. 10B, Fig. 12A, and Fig. 12B.

The in-vehicle weighing apparatus 12 of this embodiment has characteristics in the following points. The weight W of an object to be weighed can be weighed with high precision while reducing an influence of the position of the gravity center of the weighing in the tank 16. The disadvantage of the conventional dead weight meter that detects an amount of load using a pressure meter based on a hydraulic pressure of a dump cylinder that a weighed value differs largely depending on a position of the load is solved. Further, it is possible to reduce a number of load cells and attached devices as compared to the conventional dead weight meter, and therefore provide a low-cost weighing apparatus. Moreover, incorporating the pin-type load cells 18 into the hinge mechanisms 17A and 17B facilitates mounting of a weighing apparatus on a vehicle without changing a structure of the vehicle to a large extent. Furthermore, as the shaft-like body 26 of the pin-type load cell 18 is used as a pin for each of the hinge mechanisms 17A and 17B, adding the in-vehicle weighing apparatus 12 hardly increases or alters the vehicle weight or the vehicle height, or may not decrease the maximum loading weight. In addition, as the tank 16 is placed on the sub-frame 14 when not weighing or while the vehicle is driving, it is possible to use safely without problem with a frame strength.

The present invention is not limited to a sludge suction vehicle as described in this embodiment, and can be applied as an in-vehicle weighing apparatus for other vehicles having a dumping mechanism such as a dump truck and a refuse collection vehicle. In this embodiment, the pin-type load cells 18 are incorporated in both of the hinges 17A and 17B disposed on both sides in the rear of the tank 16. However, if the density of the loaded object is even and the load distribution of the loaded object on both sides are substantially even, such as in a case of liquid, or if it is desired to detect an overload from the overall weight, it is possible to incorporate the pin-type load cells in only one of the hinges on both sides.

Second Embodiment

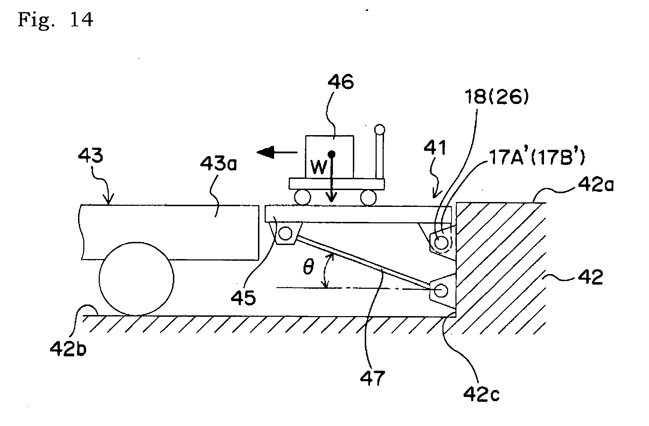

Fig. 14 shows a weighing apparatus 41 for a package pickup and delivery station according to a second embodiment of the present invention. A floor structure 42 of the package pickup and delivery station has a stepped structure including a floor surface 42a serving as a passage to a warehouse or such that is not depicted and a floor surface 42b disposed at a position lower than the floor surface 42a. The height of the floor surface 42a from the floor surface 42b is set to be generally the same as that of a loading platform 43a of a truck 43 parked on the floor surface 42b. A hang over deck 45 extends from a tip end of the floor surface 42a so that a package 46 is loaded on or unloaded from the loading platform 43a over the hang over deck 45. One end of the hang over deck 45 is rotatably coupled to (a side wall 42c between the floor surfaces 42a and 42b of) the floor structure 42 by hinges 17A' and 17B' . Further, the other end of the hang over deck 45 is rotatably coupled by a pin to one end of an inclined rod 47 of a fixed length. The inclined rod 47 extends from the hang over deck 45 diagonally downward right in the drawing, the other end of the inclined rod 47 coupled by a pin rotatably with respect to the floor surface 42b. The weighing apparatus 41 has the same truss structure as that shown in Fig. 1, and the hang over deck 45 corresponds to the loading platform A in Fig. 1, the hinges 17A' and 17B' correspond to the hinge 2A (point O) in Fig. 1, and the inclined rod 47 corresponds to the inclined rod BC in Fig. 1.

Similarly to the hinges 17A and 17B in first embodiment, the pin-type load cells 18 are incorporated in the hinges 17A' and 17B' (the pin of the hinges 17A' and 17B' corresponds to the shaft-like body 26 of the pin-type load cell 18). The posture of the shaft-like body 26 of the pin-type load cell 18 is set such that the load detection direction D' of the pin-type load cells 18 (0-degree direction) becomes identical with a direction perpendicular to the axial force P of the inclined rod 47 (see Fig. 7 and Fig. 8) . A load $F_t'$ can be obtained from an output of the pin-type load cells 18, and a load W of the package 46 can be calculated from the expressions 9 and 8 based on the load $F_t'$ and the inclined angle $\theta'$ of the inclined rod 47.

The other structures and effects of the second embodiment are the same as those described in the first embodiment.

## Claims

1.    A weighing apparatus (12), comprising:

a loading member (A, 16) on which an object to be weighed is placed, one end (O) of the loading member (A, 16) being supported by a hinge mechanism (2A, 17A, 17B) rotatably with respect to a base (1, 14);
a diagonally extending supporting member (BC, 19A, 19B) having one end (B) rotatably coupled (2B) to a position spaced apart from the one end toward the other end of the loading member, and the other end (C) rotatably coupled (2C, 21 A, 21 B) to the base (1, 14); and
a pin-type load cell (18) having a shaft-like body (26) constituting a pin of the hinge mechanism (2A 17A, 17B), and attached to the base (1, 14) such that a direction of load detection ($F_t'$) is perpendicular to an axial force (P) of the supporting member (BC, 19A, 19B).

2.    The weighing apparatus according to claim 1, wherein
the base is a body of a vehicle (11),
the loading member (16) is mounted on the vehicle body (14), rotatably coupled at a rear side to the vehicle body (14) by the hinge mechanism (17A, 17B), and operable to perform an inclining motion centering the hinge mechanism (17A, 17B),
the supporting member (19A, 19B) is an extensible cylinder (19A, 19B), the one end of which is rotatably coupled to the loading member (A, 16) and the other end of which is coupled rotatably with respect to the vehicle body (14), and
the pin-type load cell (18) is fixed to the vehicle body (14) such that a direction perpendicular to a thrust force (P) of the cylinder (19A, 19B) when the cylinder is extended so as to cause the loading member (A, 16) to incline is identical with the direction of the load detection ($F_t'$).

3.    The weighing apparatus according to claim 1, wherein
the base is a stepped floor structure having a first floor portion and a second floor portion disposed at a position lower than the first floor portion,
the loading member is rotatably coupled by the hinge mechanism to the floor structure such that a height of the one end of the loading member is identical with that of the first floor portion,
the supporting member is a diagonally extending supporting member having a fixed length, the one end of which is rotatably coupled to the loading member, and the other end of which is rotatably coupled to the second floor portion, and
the pin-type load cell is fixed to the floor structure such that a direction perpendicular to an axial force of the supporting member is identical to the direction of the load detection.

**Patentansprüche**

1. Eine Wiegevorrichtung (12), umfassend:

ein Ladeglied (A, 16) auf dem ein zu wiegender Gegenstand anzuordnen ist, wobei ein Ende (O) des Ladegliedes (A, 16), der durch einen Gelenkmechanismus (2A, 17A, 17B) drehbar in Bezug auf einen Sockel (1, 14) gestützt ist;
ein diagonal verlaufendes Stützelement (BC, 19A, 19B) aufweisend ein Ende (B), welches drehbar gekoppelt ist (2B) an einer Position, die beabstandet von dem einen Ende in Richtung des anderen Endes des Ladegliedes ist, wobei das andere Ende (C) drehbar (2C, 21A, 21B) mit dem Sockel (1, 14) gekoppelt ist; und
einen stiftartigen Kraftaufnehmer (18), aufweisend einen schaftartigen Körper (26), der einen Stift des Gelenkmechanismus (2A 17A, 17B) ausbildet derart an dem Sockel (1,14) befestigt ist, dass die Richtung der Lasterfassung ($F_t'$) rechtwinklig zu einer axialen Kraft (P) des Stützelementes (BC, 19A, 19B) ist.

2. Die Wiegevorrichtung nach Anspruch 1, wobei
der Sockel eine Karosserie eines Fahrzeuge (11) ist,
das Ladeglied (16) an der Fahrzeugkarosserie (14) montiert ist, welches drehbar an der Rückseite der Fahrzeugkarosserie (14) durch den Gelenkmechanismus (17A, 17B) gekoppelt und betriebsbereit ist, um eine Neigebewegung durchzuführen, welche den Gelenkmechanismus (17A, 17 B) zentriert,
das Stützelement (19A, 19B) ein ausziehbarer Zylinder (19A, 19B) ist, wobei dessen eines Ende drehbar an dem Ladeglied (A, 16) gekoppelt ist und dessen anderes Ende drehbar gegenüber der Fahrzeugkarosserie (14) gekoppelt ist, und
der stiftartige Kraftaufnehmer (18) an der Fahrzeugkarosserie (14) derart befestigt ist, dass eine Richtung rechtwinkelig zu einer Schubkraft (P) des Zylinders (19A, 19B) identisch ist mit der Richtung der Lasterfassung ($F_t'$), wenn der Zylinder ausgefahren ist, um so zu bewirken, dass das Ladeglied (A, 16) geneigt wird,

3. Die Wiegevorrichtung nach Anspruch 1, wobei
der Sockel eine abgestufte Bodenstruktur ist, aufweisend einen ersten Bodenabschnitt und einen zweiten Bodenabschnitt, welcher an einer niedrigeren Position als der erste Bodenabschnitt angeordnet ist,
das Ladeglied drehbar durch den Gelenkmechanismus so an der Bodenstruktur gekoppelt ist, dass die Höhe des einen Endes des Ladegliedes identisch mit der Höhe des ersten Bodenabschnitts ist,
das Stützelement ein diagonal verlaufendes Stützelement ist, aufweisend eine feste Länge, wobei dessen erstes Ende drehbar mit dem Ladeglied gekoppelt ist, und dessen zweites Ende drehbar mit dem zweiten Bodenabschnitt gekoppelt ist, und
der stiftartige Kraftaufnehmer an der Bodenstruktur derart befestigt ist, dass eine Richtung rechtwinklig zu einer axialen Kraft des Stützelementes ist identisch zur Richtung der Lasterfassung.

**Revendications**

1. Appareil de pesage (12) comprenant :

un élément de chargement (A, 16) sur lequel un objet à peser est placé, une extrémité (O) de l'élément de chargement (A, 16) étant supportée par un mécanisme de charnière (2A, 17A, 17B) en rotation par rapport à une base (1, 14) ;
un élément de support (BC, 19A, 19B) s'étendant en diagonale ayant une extrémité (B) couplée en rotation (2B) à une position espacée de la première extrémité vers l'autre extrémité de l'élément de chargement, et l'autre extrémité (C) couplée en rotation (2C, 21A, 21B) à la base (1, 14) ; et
une cellule de charge de type broche (18) ayant un corps en forme d'arbre (26) constituant une broche du mécanisme de charnière (2A, 17A, 17B) et fixée à la base (1, 14) de sorte qu'une direction de détection de charge ($F_t$,) est perpendiculaire à une force axiale (P) de l'élément de support (BC, 19A, 19B).

2. Appareil de pesage selon la revendication 1, dans lequel :

la base est un corps d'un véhicule (11),
l'élément de chargement (16) est monté sur le corps de véhicule (14), couplé en rotation au niveau d'un côté arrière au corps de véhicule (14) par le mécanisme de charnière (17A, 17B), et pouvant fonctionner pour réaliser un mouvement incliné centrant le mécanisme de charnière (17A, 17B),

l'élément de support (19A, 19B) est un cylindre extensible (19A, 19B), dont une extrémité est couplée en rotation à l'élément de chargement (A, 16) et dont l'autre extrémité est couplée en rotation par rapport au corps de véhicule (14), et

une cellule de charge de type broche (18) est fixée au corps de véhicule (14) de sorte qu'une direction perpendiculaire à une force de poussée (P) du cylindre (19A, 19B) lorsque le cylindre est étendu afin d'amener l'élément de chargement (A, 16) à s'incliner, est identique à la direction de la détection de charge ($F_{t'}$).

3. Appareil de pesage selon la revendication 1, dans lequel :

la base est une structure de plancher étagée ayant une première partie de plancher et une seconde partie de plancher disposée dans une position plus basse que la première partie de plancher,

l'élément de chargement est couplé en rotation par le mécanisme de charnière à la structure de plancher de sorte qu'une hauteur de la première extrémité de l'élément de chargement est identique à celle de la première partie de plancher,

l'élément de support est un élément de support s'étendant en diagonale ayant une longueur fixe, dont la première extrémité est couplée en rotation à l'élément de chargement et dont l'autre l'extrémité est couplée en rotation à la seconde partie de plancher, et

la cellule de charge de type broche est fixée à la structure de plancher de sorte qu'une direction perpendiculaire à une force axiale de l'élément de support est identique à la direction de la détection de charge.

Fig. 1

Fig. 2

Fig. 3

EP 2 594 534 B1

Fig. 4

EP 2 594 534 B1

Fig. 5

Fig. 6

Fig. 7

Fig. 8

Fig. 9

Fig. 10A

Fig. 10B

Fig. 11

THEORETICAL OUTPUT RATIO

INCLINATION ANGLE α (DEGREES)
IN DIRECTION OF LOAD

Fig. 12A

Fig. 12B

Fig. 13A

Fig. 13B

Fig. 14

**REFERENCES CITED IN THE DESCRIPTION**

**Patent documents cited in the description**

- US 5677498 A
- JP 8058456 H
- JP 2006052084 A
- JP 2007139511 A
- JP 2009101979 A